# FASCICULE DE BREVET EUROPEEN

(11) **EP 1 506 907 B1**
(45) Date de publication et mention de la délivrance du brevet: **27.07.2011**
(21) Numéro de dépôt: 04292010.8
(22) Date de dépôt: 06.08.2004
(51) Int. Cl.: B62D 25/08, B60R 21/34

(54) **Traverse de face avant technique d'un véhicule automobile, face avant technique et support de module de refroidissement munis d'une telle traverse**
Querträger eines vorderen Kfz-Bauelementes, Bauelement und Kühlerträger mit einem solchen Querträger
Transverse beam of a frontal module of a vehicle, frontal module and radiator support comprising such a transverse beam

(30) Priorité: 11.08.2003 FR 0309836
(43) Date de publication de la demande: 16.02.2005
(73) Titulaire: COMPAGNIE PLASTIC OMNIUM, 69007 Lyon (FR)
(72) Inventeur: Andre, Gérald, 01500 Amberieu en Bugey (FR)
(74) Mandataire: Remy, Vincent Noel Paul

(56) Documents cités:
- EP-A- 1 067 039
- EP-A- 1 291 247
- DE-A- 10 042 037
- DE-A- 10 143 532
- FR-A- 2 836 434

## Description

La présente invention concerne une traverse de face avant technique d'un véhicule automobile, une face avant technique et un support de module de refroidissement munis d'une telle traverse.

On connaît déjà, dans l'état de la technique, d'après EP 1067039 A1 une traverse conforme au préambule de la revendication 1.

Une traverse similaire peut être disposée sous un capot, des éléments de liaison permettant de laisser un espace vide entre la traverse et le capot, de manière à permettre une course du capot dans cet espace vide lors de chocs contre ce capot.

Afin de disposer d'un espace vide, il est nécessaire de réduire la hauteur de la traverse, ce qui entraîne une réduction de son inertie.

L'obtention de cet espace vide entraîne de plus une complication du montage de la face avant technique et des éléments de liaison, du fait que ceux-ci ne peuvent être pré-montés sur la face avant technique et venir en même temps qu'elle sur le véhicule.

En outre, à cause de cet espace vide, les éléments de liaison sont nécessairement non standard, puisqu'ils doivent comporter des dispositifs spécifiques leur permettant à la fois d'assurer leur fonction propre et de se libérer d'une course déterminée lors d'un choc piéton, ce afin de limiter la décélération subie par le piéton.

L'invention a notamment pour but de remédier à ces inconvénients en fournissant une traverse ayant une inertie suffisante et étant susceptible de permettre une course du capot lors de chocs contre ce capot sans qu'un espace vide soit ménagé dans ce but.

A cet effet, l'invention a pour objet une traverse destinée à se trouver à proximité d'une pièce de carrosserie conformément à la revendication 1.

Ainsi, une traverse selon l'invention est susceptible de permettre une course du capot en cas de choc contre ce capot, et cela sans réduction d'inertie de cette traverse.

Selon d'autres caractéristiques avantageuses de l'invention, qui peuvent être prises seules ou en combinaison :
- la pièce d'inertie occupe toute la hauteur de la pièce de stabilisation ;
- la pièce d'inertie est une âme ayant une section en C ou en S ;
- la pièce d'inertie est ajourée en regard de la première partie ;
- la première partie est munie de nervures agencées pour flamber lors de chocs dirigés vers le bas, lorsque la traverse est montée sur le véhicule ;
- la première partie est munie de nervures agencées pour flamber lors de chocs dirigés vers l'arrière, lorsque la traverse est montée sur le véhicule ;
- les nervures n'ont pas de cohésion latérale avec la pièce d'inertie, de manière à pouvoir flamber en cas de choc ;
- la seconde partie est munie de nervures de rigidification ;
- la pièce d'inertie est une âme métallique ;
- la pièce d'inertie est en matière plastique ;
- les nervures de rigidification sont en matière plastique ;
- la traverse comporte des moyens de liaison avec la pièce de carrosserie ;
- les moyens de liaison comportent des butées sur lesquelles la pièce de carrosserie est susceptible de prendre appui ;
- les moyens de liaison comportent un crochet susceptible de maintenir la pièce de carrosserie à proximité de la traverse ;
- le crochet est fixé à la pièce d'inertie, sur la seconde partie ;
- les moyens de liaison comportent une serrure d'engachage de la pièce de carrosserie, agencée sur la première partie de la pièce d'inertie.
- la traverse comporte dans sa partie supérieure une plage de liaison destinée à recevoir un pare-chocs ou une calandre, cette plage de liaison étant susceptible de transmettre des efforts équivalent à un choc hanche ;
- la traverse comporte dans sa partie supérieure un joint de capot ;
- un élément nécessitant une forte rigidité, par exemple un capteur, est agencé sur la partie inférieure de la traverse
- le crochet est plus long qu'un crochet standard ;
- la traverse est destinée à être agencée sur une face avant technique d'un véhicule automobile.

L'invention a également pour objet une face avant technique pour véhicule automobile, caractérisée en ce qu'elle comporte une traverse telle que décrite ci-dessus.

L'invention a enfin pour objet un support d'un module de refroidissement pour véhicule automobile, caractérisé en ce qu'il comporte une telle traverse.

L'invention sera mieux comprise à la lecture de la description qui va suivre, donnée uniquement à titre d'exemple et faite en se référant aux dessins annexés dans lesquels :
- la figure 1 représente, en perspective, une traverse selon un mode de réalisation de l'invention, vue de l'extérieur ;
- la figure 2 est une vue analogue à la figure 1 représentant la traverse vue de l'intérieur ;
- la figure 3 est une vue de l'intérieur d'une face avant technique munie d'une telle traverse ;
- la figure 4 est un détail de la figure 3, montrant des moyens de vissage de la traverse sur une doublure d'aile.

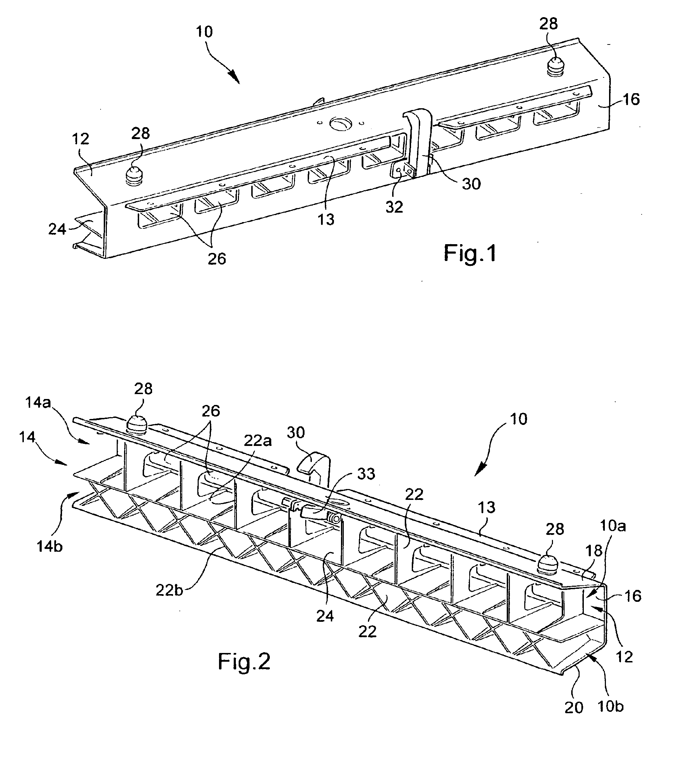

La traverse représentée sur les figures 1 et 2 est désignée par la référence générale 10. Elle est destinée à se trouver à proximité d'une pièce de carrosserie (non représentée) susceptible de se déplacer en direction de la traverse. Cette pièce de carrosserie peut être par exemple un capot avant de véhicule automobile.

La traverse 10 est munie d'une pièce d'inertie 12 et d'une pièce 14 de stabilisation géométrique de cette pièce d'inertie 12.

Plus précisément, la pièce d'inertie 12 se compose d'une paroi 16 verticale (dans l'orientation du dessin) et de deux rebords 18 et 20 sensiblement horizontaux (dans l'orientation du dessin) s'étendant perpendiculairement à la paroi verticale 16, suivant la direction longitudinale de la traverse 10. La pièce d'inertie 12 a donc une section en C, mais selon un autre mode de réalisation non représenté, cette section peut être en forme de S.

La pièce d'inertie comporte dans sa partie supérieure une plage de liaison 13, destinée à recevoir un pare-chocs ou une calandre. Cette plage de liaison 13 est susceptible de transmettre des efforts équivalents à un choc hanche avec un piéton.

Eventuellement, la pièce d'inertie comporte de plus dans sa partie supérieure un joint de capot (non représenté).

Afin d'avoir une bonne inertie, la pièce d'inertie 12 occupe tout l'espace habituellement disponible pour une traverse. Pour cela, la pièce d'inertie 12 occupe toute la hauteur de la pièce de stabilisation 14.

En général, la pièce d'inertie 12 est une âme métallique, mais il est envisageable de concevoir cette pièce d'inertie 12 en matière plastique, ou encore en matériau composite.

La pièce de stabilisation 14 quant à elle est divisée longitudinalement en une première partie 14a, se trouvant du coté de la pièce de carrosserie et en une seconde partie 14b se trouvant à l'opposé de la pièce de carrosserie.

Ces deux parties 14a, 14b définissent des première 10a et seconde 10b parties de la traverse 10.

Les parties 14a, 14b sont conçues de manière à ce qu'en cas d'effort équivalent à un choc avec un piéton appliqué au capot, celui ci peut, sans que la seconde partie 14b se déforme, se rapprocher de cette seconde partie 14b en déformant la pièce d'inertie 12 et la première partie 14a. Cependant, la pièce d'inertie et la première partie 14a sont dimensionnées pour pouvoir se déformer dans leur domaine élastique uniquement lorsque l'effort appliqué au capot est inférieur à un certain seuil, par exemple en cas d'effort de claquage capot.

La première partie 14a, ainsi que la première partie 10a de la traverse sont susceptibles de se déformer sans opposer de forte résistance à l'effort équivalent à un choc piéton, alors que la seconde partie 14b, ainsi que la seconde partie 10b de la traverse ont une structure rigide protégeant la structure en cas d'effort important, par exemple en situation d'accident.

Cette différence de comportement entre les parties supérieure 10A et inférieure 10B de la traverse 10 est notamment due à des nervures 22 qui vont maintenant être décrites.

Les nervures 22 sont généralement réalisées en matière plastique et sont divisées en deux groupes, 22a et 22b, l'un supérieur et l'autre inférieur.

Les nervures 22a du groupe supérieur s'étendent verticalement (dans l'orientation du dessin), c'est-à-dire perpendiculairement aux rebords 18 et 20, et perpendiculairement à la paroi verticale 16 de la pièce d'inertie 12.

Les parties supérieure 10a et inférieure 10b de la traverse sont séparées par un plan 24 venu de moulage avec les nervures 22, disposé sensiblement parallèlement au bord 18 de la pièce d'inertie 12.

Ce plan 24 sert d'appui aux nervures 22a du groupe supérieur par sa face supérieure, et aux nervures 22b du groupe inférieur par sa face inférieure.

Les nervures 22 sont réalisées par surmoulage de la pièce d'inertie 12 et adhèrent à la face intérieure de cette pièce d'inertie 12. Toutefois, par exception, les nervures 22a du groupe supérieur sont désolidarisées de la paroi verticale 16 et ne sont en conséquence reliées à la pièce d'inertie 12 que par leurs bords supérieurs qui adhèrent à la face inférieure du rebord supérieur 18.

Il en résulte que les nervures 22a du groupe supérieur ont une inertie très faible suivant la direction verticale et que la compression verticale du support provoque l'écrasement de sa partie supérieure, les nervures 22a pouvant aisément flamber sans être retenues par la paroi verticale 16 de la pièce d'inertie 12.

En d'autres termes, les nervures 22a du groupe supérieur n'opposent pas de résistance à la déformation de la partie supérieure 10a de la traverse en cas de choc avec la tête d'un piéton.

Ces nervures 22a ainsi agencées peuvent de la même façon flamber lors de chocs dirigés vers l'arrière, par exemple en cas de choc hanche suivant une direction inclinée vers l'arrière.

On notera que, de plus, la pièce d'inertie 12 est ajourée en regard de la première partie 14a de la pièce de stabilisation. Ces ajours 26 ont pour fonction de diminuer la rigidité selon un axe vertical de la pièce d'inertie 12 dans cette partie supérieure 10A, afin de faciliter sa déformation en cas de compression verticale.

Les nervures 22b du groupe inférieur sont quant à elles agencées en un nid d'abeilles, en étant inclinées par rapport au bord inférieur 20 de la pièce d'inertie 12 et au plan de séparation 24, et croisées entre elles. Leurs bords sont solidaires de la partie inférieure 10b de la pièce d'inertie 12, c'est-à-dire le bord inférieur 20 et la partie inférieure de la paroi verticale 16, ainsi que du plan de séparation 24 entre les deux groupes de nervures.

Dans un autre mode de réalisation non représenté, les nervures 22b peuvent être agencées en V.

Ainsi agencées et maintenues en réseau, les nervures 22b du groupe inférieur constituent une structure adaptée pour résister aux sollicitations prévues par les cahiers des charges traditionnels de faces avant techniques.

De plus, la partie inférieure de la pièce d'inertie 12, dépourvue d'ajours, est plus rigide que la partie supérieure de la pièce d'inertie 12 et ne se déforme pas lors d'une compression.

La partie inférieure est donc adaptée pour recevoir des éléments nécessitant une forte rigidité, notamment différents capteurs.

Par ailleurs, la traverse 10 comporte des moyens de liaison avec le capot. Des butées 28, sur lesquelles le capot est susceptible de prendre appui, sont agencées sur le rebord supérieur 18 de la pièce d'inertie 12. Le capot est susceptible d'être maintenu à proximité de la traverse 10 grâce à un crochet 30, fixé à la pièce d'inertie 12, sur la seconde partie 10b, par l'intermédiaire de moyens de fixation 32. Il est en effet nécessaire que le crochet soit fixé sur la partie rigide de la traverse, afin que cette traverse puisse répondre à un cahier des charges structurel demandant entre autre que le crochet 30 puisse résister à un effort d'arrachage capot. Ce crochet 30 ainsi fixé sur la partie inférieure de la pièce d'inertie est nécessairement plus long qu'un crochet standard.

Les moyens de liaison comportent de plus une serrure 33 d'engachage de la pièce de carrosserie.

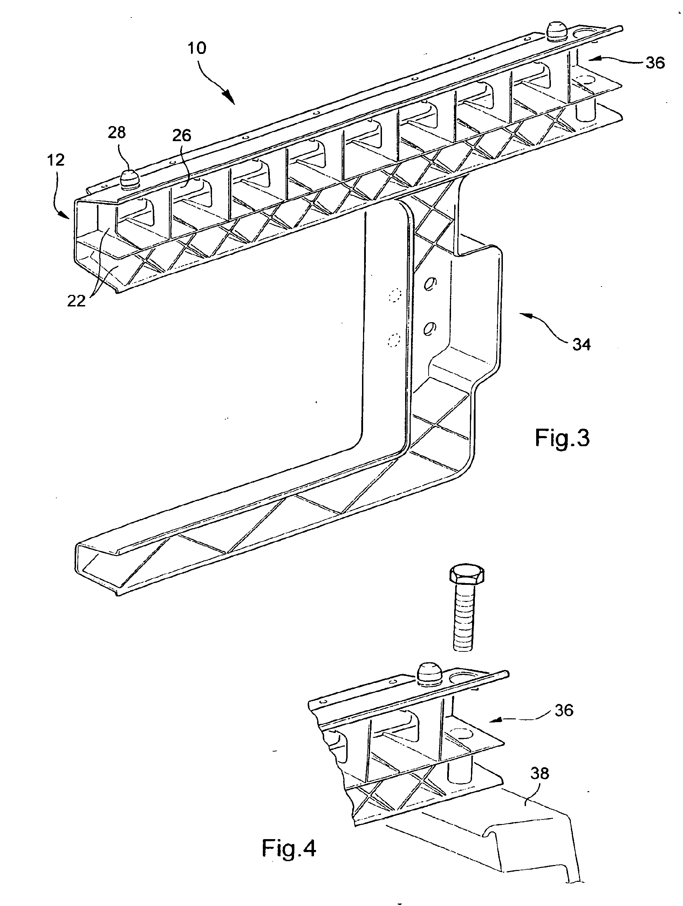

Dans le mode de réalisation décrit, la traverse 10 est destinée à être agencée sur une face avant technique 34, comme visible sur la figure 3.

La traverse 10 comporte en outre des moyens 36 de vissage de la seconde partie 14b sur une doublure d'aile 38 du véhicule automobile.

Il est bien entendu que le mode de réalisation qui vient d'être décrit ne présente aucun caractère limitatif et qu'il pourra recevoir toute modification désirable sans sortir pour cela de la portée des revendications.

## Revendications

1. Traverse (10) destinée à se trouver à proximité d'une pièce de carrosserie susceptible de se déplacer en direction de la traverse (10), cette traverse (10) étant munie d'une pièce d'inertie (12) et d'une pièce (14) de stabilisation géométrique de la pièce d'inertie (12), la pièce de stabilisation (14) est divisée longitudinalement en une première partie (14a) se trouvant du coté de la pièce de carrosserie et une seconde partie (14b) se trouvant à l'opposé de la pièce de carrosserie, les première et seconde parties étant conformées de manière à ce qu'en cas d'effort équivalent à un choc avec un piéton appliqué à la pièce de carrosserie, celle-ci peut, sans que la seconde partie (14b) se déforme, se rapprocher de cette seconde partie (14b) en déformant la pièce d'inertie (12) et la première partie (14a), **caractérisée en ce que** la première partie est à cet effet munie de nervures (22a) n'avant pas de cohésion latérale avec la pièce d'inertie (12), de manière à pouvoir flamber lors de chocs dirigés vers le bas, lorsque la traverse (10) est montée sur le véhicule, et **en ce que**
la pièce d'inertie (12) est une âme avant une section en C ou en S.

2. Traverse (10) selon la revendication 1, dans laquelle la pièce d'inertie (12) occupe toute la hauteur de la pièce de stabilisation (14).

3. Traverse (10) selon l'une quelconque des revendications précédentes, dans laquelle la pièce d'inertie (12) est ajourée en regard de la première partie (14a).

4. Traverse (10) selon l'une quelconque des revendications précédentes, dans laquelle la première partie (14a) est munie de nervures (22a) agencées pour flamber lors de chocs dirigés vers l'arrière, lorsque la traverse (10) est montée sur le véhicule.

5. Traverse (10) selon l'une quelconque des revendications précédentes, dans laquelle la seconde partie (14b) est munie de nervures (22b) de rigidification.

6. Traverse (10) selon l'une quelconque des revendications précédentes, dans laquelle la pièce d'inertie (12) est une âme métallique.

7. Traverse (10) selon l'une quelconque des revendications 1 à 5, dans laquelle la pièce d'inertie (12) est en matière plastique.

8. Traverse (10) selon l'une quelconque des revendications précédentes, dans laquelle les nervures de rigidification (22) sont en matière plastique.

9. Traverse (10) selon l'une quelconque des revendications précédentes, comportant des moyens de liaison de la traverse avec la pièce de carrosserie.

10. Traverse (10) selon la revendication précédente, dans laquelle les moyens de liaison comportent des butées (28) sur lesquelles la pièce de carrosserie est susceptible de prendre appui.

11. Traverse (10) selon la revendication 9 ou 10, dans laquelle les moyens de liaison comportent un crochet (30) susceptible de maintenir la pièce de carrosserie à proximité de la traverse.

12. Traverse (10) selon la revendication précédente, dans laquelle le crochet (30) est fixé à la pièce d'inertie (12), en regard de la seconde partie (14b).

13. Traverse (10) selon la revendication 11 ou 12, dans laquelle le crochet (30) est plus long qu'un crochet standard.

14. Traverse (10) selon l'une quelconque des revendications 9 à 13, dans laquelle les moyens de liaison comportent une serrure d'engachage de la pièce de carrosserie, agencé sur la première partie de la pièce d'inertie.

15. Traverse (10) selon l'une quelconque des revendications précédentes, comportant dans sa partie supérieure une plage de liaison destinée à recevoir un parechocs ou une calandre, cette plage de liaison étant susceptible de transmettre des efforts équivalent à un choc hanche.

16. Traverse (10) selon l'une quelconque des revendications précédentes, comportant dans sa partie supérieure un joint de capot.

17. Traverse (10) selon l'une quelconque des revendications précédentes, dans laquelle un élément nécessitant une forte rigidité, par exemple un capteur, est agencé sur la partie inférieure de la traverse (10).

18. Traverse (10) selon l'une quelconque des revendications précédentes, destinée à être agencée sur une face avant technique (34) d'un véhicule automobile.

19. Face avant technique (34) pour véhicule automobile, **caractérisé en ce qu'**elle comporte une traverse (10) selon l'une quelconque des revendications précédentes.

20. Support d'un module de refroidissement pour véhicule automobile, **caractérisé en ce qu'**il comporte une traverse (10) selon l'une quelconque des revendications 1 à 18.

## Claims

1. Cross-member (10) for a vehicle designed to be located in the proximity of a bodywork part capable of moving towards the cross-member (10), the cross-member (10) comprising an inertia part (12) and a stabilization part (14) for geometrically stabilizing the inertia part (12) the stabilization part (14) is longitudinally subdivided into a first portion (14a) located beside the bodywork part, and a second portion (14b) located remote from the bodywork part, the first and second portions being conformed in such a manner that in the event of the bodywork part being subjected to a force equivalent to an impact against a pedestrian, said part can, without the second portion (14b) deforming, move towards second portion (14b) while deforming the inertia part (12) and the first portion (14a), and the first portion is provided with ribs that do not present any lateral cohesion with the inertia part (12) so as to be able to buckle in response to impacts that are directed downwardly when the cross-member (10) is mounted on a vehicle and in that the inertia part (12) is a core having a C-shaped section or a S-shaped section.

2. Cross-member (10) according to claim 1, in which the inertia part (12) occupies the full height of the stabilization part (14).

3. Cross-member according to any one the preceding claims, in which the inertia part (12) is provided with openings in register with the first portion (14a).

4. Cross-member (10) according to any one of the preceding claims, in which the first portion (14a) is provided with ribs (22a) are arranged to buckle in response to impacts that are directed rearwardly when the cross-member is mounted on the vehicle.

5. Cross-member (10) according to any one of the preceding claims, in which the second portion (14b) forms stiffening ribs (22b).

6. Cross-member (10) according to any one of the preceding claims, in which the inertia part (12) is a metallic core.

7. Cross-member (10) according to any one claims 1 to 5, wherein the inertia part is made of plastic.

8. Cross-member (10) according any one of the preceding claims, wherein the stiffening ribs (22) are made of plastic.

9. Cross-member (10) according to any one of the preceding claims, including connection means for connecting the cross-member to the bodywork part of the vehicle.

10. Cross-member (10) according to the preceding claim, in which the connection means comprise abutments (28) against which the bodywork part can come to bear.

11. Cross-member (10) according to claim 9 or 10, in which the connector comprises a hook suitable for holding the bodywork part close to the cross-member.

12. Cross-member (10) according to the preceding claim, in which the hook (30) is fastened to the inertia part (12) in register with the second portion (14b).

13. Cross-member (10) according to claim 11 or 12, in which the hook is longer than a standard hook.

14. Cross-member (10) according to any one of claims 9 to 13, in which the connection means comprises a lock for catching the bodywork part, and arranged on the first portion.

15. Cross-member (10) according to any one of the preceding claims, including a top portion having a connection area for receiving a bodywork part, the connection area being suitable for transmitting forces equivalent to an impact against a hip.

16. Cross-member (10) according to any one of the preceding claims , includes a top portion having a hood gasket.

17. Cross-member (10) according to any one the preceding claims, wherein an element requiring a high degree of stiffness, for instance a sensor, is arranged on the bottom portion of the cross-member (10).

18. Cross-member (10) according to any one the preceding claims, designed to be arranged on a motor vehicle front end module (34).

19. Motor vehicle front end module (34), **characterized in that** it includes a cross-member (10) according to any one of the preceding claims.

20. Motor vehicle cooling module support, **characterized in that** includes a cross-member (10) according to any one of claims 1 to 18.

## Patentansprüche

1. Querträger (10), der dazu bestimmt ist, in der Nähe eines Kfz-Bauelementes zu liegen, das sich in Richtung des Querträgers (10) bewegen kann, wobei dieser Querträger (10) mit einem Trägheitsteil (12) und mit einem Teil (14) zur geometrischen Stabilisation des Trägheitsteils (12) versehen ist, wobei der Stabilisationsteil (14) längs in einen ersten Teil (14a), der sich auf der Seite des Kfz-Bauelementes befindet, und einen zweiten Teil (14b), der sich dem Kfz-Bauelement gegenüber befindet, geteilt ist, wobei der erste und der zweite Teil derart ausgebildet sind, dass sich das Kfz-Bauelement bei einer Kraft, die einem Zusammenstoß mit einem Fußgänger entspricht, die an den Kfz-Bauteil angelegt wird, ohne dass sich der zweite Teil (14b) verformt, diesem zweiten Teil (14b) nähern kann und dabei den Trägheitsteil (12) und den ersten Teil (14a) verformt, und **dadurch gekennzeichnet, dass** der erste Teil dazu mit Rippen (22a) versehen ist, die keine seitliche Kohäsion mit dem Trägheitsteil (12) haben, so dass sie bei Stößen, die nach unten gerichtet sind, knicken können, wenn der Querträger (10) auf das Fahrzeug montiert ist, wobei der Trägheitsteil (12) eine Seele mit einem Coder S-förmigen Querschnitt ist.

2. Querträger (10) nach Anspruch 1, bei dem der Trägheitsteil (12) die ganze Höhe des Stabilisationsteils (14) belegt.

3. Querträger (10) nach einem der vorhergehenden Ansprüche, bei dem der Trägheitsteil (12) gegenüber dem ersten Teil (14a) durchbrochen ist.

4. Querträger (10) nach einem der vorhergehenden Ansprüche, bei dem der erste Teil (14a) mit Rippen (22a) versehen ist, die eingerichtet sind, um bei Stößen, die nach hinten gerichtet sind, zu knicken, wenn der Querträger (10) auf das Fahrzeug montiert ist.

5. Querträger (10) nach einem der vorhergehenden Ansprüche, bei dem der zweite Teil (14b) mit Versteifungsrippen (22b) versehen ist.

6. Querträger (10) nach einem der vorhergehenden Ansprüche, bei dem der Trägheitsteil (12) eine metallische Seele ist.

7. Querträger (10) nach einem der Ansprüche 1 bis 5, bei dem der Trägheitsteil (12) aus Kunststoff besteht.

8. Querträger (10) nach einem der vorhergehenden Ansprüche, bei dem die Versteifungsrippen (22) aus Kunststoff bestehen.

9. Querträger (10) nach einem der vorhergehenden Ansprüche, der Mittel zum Verbinden des Querträgers mit dem Kfz-Bauelement aufweist.

10. Querträger (10) nach dem vorhergehenden Anspruch, bei dem die Verbindungsmittel Anschläge (28) aufweisen, auf welchen das Kfz-Bauelement aufliegen kann.

11. Querträger (10) nach Anspruch 9 oder 10, bei dem die Verbindungsmittel einen Haken (30) aufweisen, der das Kfz-Bauelement in der Nähe des Querträgers halten kann.

12. Querträger (10) nach dem vorhergehenden Anspruch, bei dem der Haken (30) an dem Trägheitsteil (12) gegenüber dem zweiten Teil (14b) befestigt ist.

13. Querträger (10) nach Anspruch 11 oder 12, bei dem der Haken (30) länger ist als ein Standardhaken.

14. Querträger (10) nach einem der Ansprüche 9 bis 13, bei dem die Verbindungsmittel ein Schloss zum Einhaken des Kfz-Bauelements auf dem ersten Teil des Trägheitsteils eingerichtet aufweisen.

15. Querträger (10) nach einem der vorhergehenden Ansprüche, der in seinem oberen Teil einen Verbindungsbereich aufweist, der dazu bestimmt ist, einen Stoßfänger oder eine Kühlermaske zu erhalten, wobei dieser Verbindungsbereich Kräfte, die einem Hüftstoß entsprechen, aufnehmen kann.

16. Querträger (10) nach einem der vorhergehenden Ansprüche, der in seinem oberen Teil eine Motorhaubendichtung aufweist.

17. Querträger (10) nach einem der vorhergehenden Ansprüche, bei dem ein Element, das eine große Steifigkeit benötigt, zum Beispiel ein Sensor, auf dem unteren Teil des Querträgers (10) eingerichtet ist.

18. Querträger (10) nach einem der vorhergehenden Ansprüche, der dazu bestimmt ist, auf einer technischen Vorderseite (34) eines Kraftfahrzeugs eingerichtet zu werden.

19. Technische Vorderseite (34) für Kraftfahrzeug, **dadurch gekennzeichnet, dass** sie einen Querträger (10) nach einem der vorhergehenden Ansprüche aufweist.

20. Träger eines Kühlemoduls für Kraftfahrzeug, **dadurch gekennzeichnet, dass** er einen Querträger (10) nach einem der Ansprüche 1 bis 18 aufweist.
